# EUROPEAN PATENT APPLICATION

(11) **EP 1 491 407 A1**
(43) Date of publication of application: **29.12.2004**
(21) Application number: 04253715.9
(22) Date of filing: 22.06.2004
(51) Int. Cl.: B60R 19/04, B60R 19/34

(54) **Bumper reinforcing structure of automobile**

(30) Priority: 23.06.2003 KR 2003040600
(71) Applicant: Lee, Hwa-sun, Daejeon-si, Chungcheongnam-do (KR)
(72) Inventor: Lee, Hwa-sun, Daejeon-si, Chungcheongnam-do (KR)
(74) Representative: Jehan, Robert

(57) **Abstract**

A bumper reinforcing structure (10) of an automobile is made of two or more different materials. The bumper reinforcing structure (10) comprises an impact beam (20), a mounting part (30) connected to either end of the impact beam, and a connecting portion (40) for connecting the impact beam (20) and the mounting part (30) to each other at either end of the impact beam. The impact beam (20) and the mounting part (30) consist of two or more different materials. Among the components of the bumper reinforcing structure (10), a portion which requires stiffness is made of a material having a high strength, while a portion which is readily deformable is made of a material having a high strain, so that the bumper reinforcing structure (10) can effectively absorb impact energy upon collision, thereby maximising the energy absorbing efficiency.

## Description

The present invention relates to a bumper reinforcing structure of an automobile, and more particularly to a bumper reinforcing structure of an automobile, which is made of two or more different materials.

As a component of an automobile, a bumper is mounted at front and rear sides of the automobile to absorb impact energy upon collision caused by traffic accidents, thereby protecting a body frame and securing safety of a driver in the automobile.' Specifically, a front bumper is mounted at the front side of the automobile to protect a hood constituting the body frame and many kinds of component, such as an engine mounted in an engine compartment, and a rear bumper is mounted at the rear side for the same purpose as that of the front bumper.

The bumper must have a standardised strength, and be structured such that the body frame can be protected by a buffering force of the bumper having such a standardised strength without being broken upon a low speed collision of the automobile and such that an impact can be prevented from being transmitted to the engine compartment simultaneously with the buffering effect.

In general, the automobile bumper comprises a bumper facia, an energy absorber for absorbing the impact from the outside upon collision, a reinforcing structure for protecting the body frame by shielding the impact from the outside, and a bumper mounting bracket for fixing the bumper to the frame.

The reinforcing structure comprises an impact beam, which is directly exposed to the impact from the outside, and a mounting part for sustaining a moment and a force applied to the impact beam while supporting the impact beam.

The reinforcing structure consists of a material, such as metal, synthetic resin containing glass fibre or the like, and is manufactured as an integral component.

Meanwhile, the metal reinforcing structure has a problem of heavy weight, and the synthetic resin containing the glass fibre is expensive, thereby increasing manufacturing costs when manufacturing the reinforcing structure with the synthetic resin. That is, since the reinforcing structure is made of a single material as an integral component, there are problems of high price or heavy weight.

Moreover, allowing that the moment and the force caused by the collision are concentrated on the mounting part, it can be suggested to reduce damage of the mounting part itself by increasing strength of the mounting part. However, since an increase in strength of the mounting part would cause all the impact absorbed by the mounting part to be transmitted to the body frame, this suggestion is inappropriate in view of protection of the driver. Additionally, since the reinforcing structure comprising the mounting part is integrally manufactured, an increase in weight of the mounting part is accompanied with an increase in weight of the bumper, thereby reducing economical efficiency.

Meanwhile, since reduction in strength of the mounting part for solving the above problems causes deformation of the mounting part upon collision to be increased, the bumper must be increased in size in order to secure a deformation space, resulting in a bad appearance. Moreover, even though the mounting part is designed such that the impact directly transmitted to the driver can be reduced in such a manner that the mounting part is broken upon collision, the breakage of the mounting part is followed by replacement of the entire reinforcing structure due to the fact that the mounting part is integrated with the reinforcing structure as an integral component, thereby remarkably increasing economical burden for replacing the damaged reinforcing structure with a new one.

Further, since the mounting part and the impact beam are produced as an integral component of the reinforcing structure, in a case where the mounting part is made of a material having a weak stiffness as described above, the impact beam also consists of the material having the weak stiffness. As a result, there are provided structural drawbacks in that the impact beam, which is required to have a relatively high stiffness, has a reduced stiffness.

The present invention seeks to provide an improved bumper structure.

According to an aspect of the present invention, there is provided a bumper reinforcing structure as specified in claim 1.

The preferred embodiment provides a bumper reinforcing structure of an automobile, which is made of two different materials, so that an energy absorbing efficiency of impact energy can be maximised upon collision.

The preferred bumper reinforcing structure of an automobile can be separated to separate subcomponents made of different materials, respectively, thereby making it easy to manufacture the bumper reinforcing structure and reducing manufacturing costs and maintenance costs thereof.

According to an embodiment, there is provided a bumper reinforcing structure of an automobile, comprising an impact beam, a mounting part connected to either end of the impact beam, and a connecting portion for connecting the impact beam and the mounting part to each other at either end of the impact beam, wherein the impact beam and the mounting part consist of two or more different materials.

Embodiments of the present invention are described below, by way of example only, with reference to the accompanying drawings, in which:
Fig. 1 is a perspective view of an embodiment of bumper reinforcing structure of an automobile according to the present invention;
Fig. 2 is a diagram illustrating a connecting portion of the bumper reinforcing structure of Figure 1;

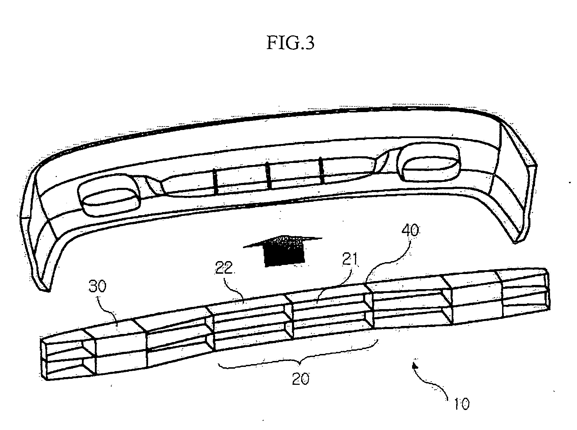

Fig. 3 is a rear perspective view of the bumper reinforcing structure, when connecting the bumper reinforcing structure to a bumper facia;

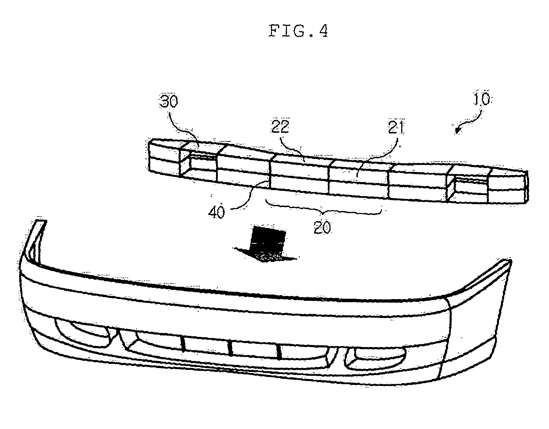

Fig. 4 is a front perspective view of the bumper reinforcing structure, when connecting the bumper reinforcing structure to a bumper facia; and
Fig. 5 is a graphical representation depicting results of a test showing one effect of the bumper reinforcing structure.

Preferred embodiments will now be described in detail with reference to the accompanying drawings.

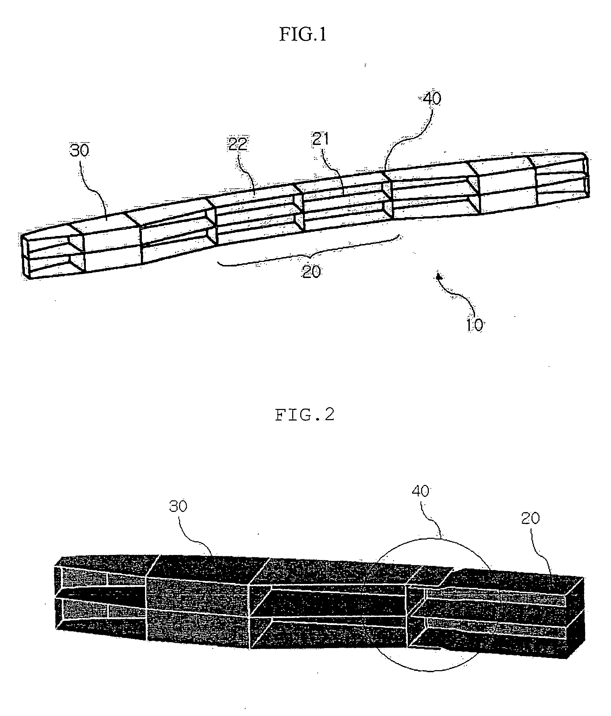

Fig. 1 shows a bumper reinforcing structure of an automobile according to the present invention, which consists of two or more different materials. As shown in Fig. 1, the bumper reinforcing structure of the invention comprises an impact beam 20, a mounting part 30 connected to either end of the impact beam 20, and a connecting portion 40 for connecting the impact beam 20 and the mounting part 30 to each other.
The impact beam 20 serves to receive an impact applied to the automobile from the outside at the front side thereof, and consists of a material having an elongation of lower than 15%, for example, metal such as high-tensile strength steel, or synthetic resin containing glass fibre such as GMT (Glass fibre Mat reinforced thermoplastics) and LFT (long glass fibre thermoplastics) or reinforced plastics. It is necessary that the impact beam 20 be capable of sustaining an impact force generated at the moment of collision, and have a low deformation amount for the impact. Accordingly, in order to satisfy these requirements, it is more preferable that the impact beam consists of a material having a high stiffness.

Meanwhile, although the impact beam 20 consists entirely of a single material, respective portions constituting the impact beam 20 may consist of different materials. That is, in a case where the impact beam 20 has a C-shaped reinforcing rib, a vertical portion 21 of the impact beam 20 is made of a metal having a high stiffness, and a horizontal portion 22 thereof, which is subjected to a relatively large deformation, is made of a plastic material, so that the impact beam can absorb the Impact energy more effectively than the impact beam consisting entirely of metal, and significantly reduce the weight of the reinforcing structure. Meanwhile, in a case where the impact beam is made of the synthetic resin containing the glass fibre or the plastic, according to an offset barrier test among front collision tests for the automobile, there is a problem in that when the impact beam is subjected to the impact, the centre of the impact beam tends to be broken, causing the impact to be mainly transmitted to structures at one side of the automobile. However, for the impact beam according to the invention, although the impact beam can be bent due to the metallic portion of the impact beam, it is not broken. Accordingly, the impact beam can connect the structures to each other at both sides of the automobile upon collision.

The mounting part 30 serves to sustain the moment and the force caused by the collision applied to the impact beam 20 while supporting the impact beam 20. The mounting part 30 may also consist of the material, such as metal, synthetic resin containing glass fibre, plastic or the like. Here, the mounting part 30 may be made of the same material as that of the impact beam 20 or a different material.

Meantime, the mounting part 30 is connected to the impact beam 20, acting to sustain the impact applied to the impact beam 20, so that the deformation of the impact beam 20 by the amount of the impact beam 20 thrust into the mounting part 30 by the impact from the outside can be completely reflected to the mounting part 30. That is, the mounting part 30 is also bent toward the centreline of the automobile by a displacement of the impact beam 20 thrust thereto by the impact.

The impact beam 20 and the mounting part 30 absorb impact energy by an amount proportional to the square of the displacement thereof. Accordingly, the impact energy applied from the outside is not completely transmitted, but is absorbed in a considerable amount by the impact beam 20 and the mounting part 30.

Here, in order to prevent the mounting part 30 from being bent, it can be suggested that the mounting part 30 consist of the material having the very high stiffness, thereby preventing the deformation of the mounting part 30. However, when manufacturing the mounting part 30 with the material having the very high stiffness, due to the fact that the impact absorbed by the mounting part 30 is completely transmitted to the body frame, the material of the very high stiffness is inappropriate for the mounting part in view of the protection of the driver.

Accordingly, in order to overcome this problem, the mounting part 30 is preferably made of a plastic material having an elongation rate of 15-500%. That is, the mounting part is designed to have a big strain, so that the impact from the outside can be absorbed in an amount as large as possible.

Even if the mounting part 30 is torn by the deformation or subjected to other damage, in a case where the components of the bumper reinforcing structure 10, like the mounting part 30, are separately produced with different materials, only the damaged mounting part 30 may need be replaced with a new one. Thus, it is very economical since the bumper reinforcing structure 10 of the invention is free from the burden of replacing the entire bumper reinforcing structure with a new one.

Moreover, in a case where the mounting part 30 is made of the plastic material having a big strain, there is provided an advantageous effect in that the absorber, which is typically used for an impact absorption structure, can be omitted. Accordingly, not only can cost for mounting the absorber be reduced, but a space occupied by the absorber can also be removed, entirely decreasing a package space of the bumper, thereby providing an automobile having an excellent appearance.

As a result, the bumper reinforcing structure 10 of the invention is preferably made of the different materials in such a manner that the impact beam consists of a material having a high stiffness while the mounting part 30 consists of a material having a low stiffness.

The mounting part 30 can be manufactured not only as a single component but also as several subcomponents consisting of different materials, respectively. That is, in the case where the mounting part 30 consists entirely of the plastic material having the low stiffness, if it is considered that the mounting part 30 does not satisfy some tests for testing the strength of the reinforcing structure, only a portion of the mounting part suffering a remarkably large deformation may be produced with the plastic material of the low stiffness while the other portions thereof are still made of the material having the high stiffness, thereby increasing not only the overall strength of the mounting part 30 but also the energy absorbing efficiency of the impact from the outside.

Additionally, a bumper mounting bracket is formed as an integral part of the mounting part 30 by injection moulding. Instead, after being produced with a different material, the bumper mounting bracket is added to the mounting part 30 by insert injection, thereby lowering the manufacturing costs.

In a case where the bumper reinforcing structure 10 consisting of two or more different materials has the separate components produced by way of different processes according to the materials, the connecting portion 40 connects the impact beam 20 and the mounting part 30 to each other. As for a connecting portion, but not limited to this, it is preferred to use a nut and bolt coupling structure, which can provide ease in operation as well as an increase in coupling strength at the same time.

In the bumper reinforcing structure 10 consisting of two or more different materials, application of the bumper reinforcing structure having the components produced by way of the separate processes according to the materials will be described as follows.

The conventional bumper reinforcing structure of the automobile has a width, a length and a strength fixedly preset according to type of automobile, and thus, is not compatible with other bumper reinforcing structures. However, in the case where the bumper reinforcing structure 10 has the separate components produced by way of the different processes according to the materials, the impact beam 20 and the mounting part 30 constituting the bumper reinforcing structure 10 are separately produced. Accordingly, after making the impact beam 20 of various widths, lengths or strengths and the mounting part 30 of various configurations or strengths by way of the different processes, the manufacturer connects the components selected to correspond to specifications for the respective automobiles to each other. Accordingly, there is provided a merit in that the bumper reinforcing structure 10 of the automobile according to the invention can be mounted to any type of automobile.

In other words, according to the prior art, the bumper reinforcing structure of the automobile can be manufactured as a single article fixedly preset for the respective type of automobile, whereas according to the present embodiment of the invention, the bumper reinforcing structure of the automobile of the present invention can be used for any type of automobile.

In the case where the bumper reinforcing structure of the automobile has the components produced by way of the different processes according to the materials thereof, the impact beam 20 and the mounting part 30 are connected to each other by the connecting portion 40. Meanwhile, although the impact beam 20 and the mounting part 30 can be connected to each other by various methods, such as welding, fitting, bolt coupling, insert injection, ultrasonic welding or the like, it is most preferable to use a bolt coupling structure, since the bolt coupling structure allows an easy operation as well as an increase in coupling strength.

Moreover, when using the bolt coupling structure, it helps the driver to reduce time and costs for maintaining the bumper reinforcing structure 10 of the automobile according to the invention.

That is, since the impact beam and the mounting part are manufactured as an integral component in the conventional bumper reinforcing structure of the automobile, a partial damage inflicted on any one of the components necessitates replacement of the entire bumper reinforcing structure, thereby requiring time and costs for the replacement.

However, in the case where the bumper reinforcing structure of the automobile according to the present invention has the components produced by way of the different processes according to the materials thereof, the impact beam 20 and the mounting part 30 constituting the bumper reinforcing structure can be separated. When either the impact beam 20 or the mounting part 30 is damaged, only the damaged component can be replaced with a new one, instead of replacing the entire bumper reinforcing structure with a new one. Accordingly, the costs for maintaining the bumper reinforcing structure of the automobile according to the invention can be remarkably reduced, compared with that of the conventional bumper reinforcing structure.

For instance, when the impact beam 20 of the bumper reinforcing structure 10 of the invention is damaged by an impact from the outside, the damaged impact beam is removed therefrom and replaced with a new impact beam 20. At this time, if the impact beam 20 is connected to the mounting part 30 by the bolt coupling structure, a serviceman can easily replace the impact beam with a new one.

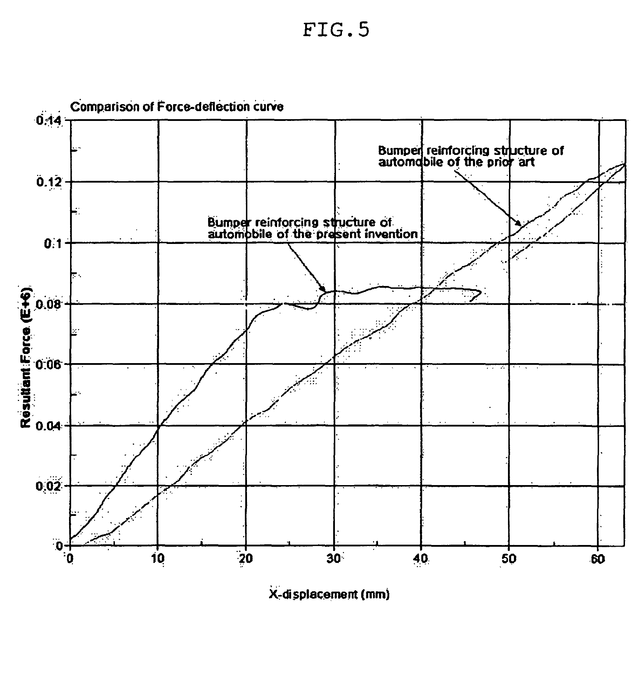

Fig. 5 is a graphical representation depicting results of a test to demonstrate an effect of the bumper reinforcing structure of the automobile according to the present invention. In this embodiment, the impact beam was made of the material, 'Verton' manufactured by GE company, which is LFT containing 30% glass fibre, and the mounting part was made of the material 'Xenoy' manufactured by GE company. The impact beam and the mounting part were produced by injection moulding and they were connected to each other by insert injection. As can be seen from the relation between reacting force and deformation shown in Fig. 5, the structure absorbs the same impact energy as that of the conventional structure, while having a lower deformation amount and force compared with the conventional structure. That is, it can be seen that the bumper reinforcing structure has an excellent energy absorbing efficiency, compared with the conventional structure.

As apparent from the above description, with the bumper reinforcing structure of the automobile consisting of two or more different materials, characteristics of the respective materials can be maximally utilised, thereby maximising the energy absorbing efficiency upon collision.

Further, when using the described embodiments of bumper reinforcing structure, the absorber can be omitted, ensuring reduction of space occupied by the absorber as well as reduction in the manufacturing costs, leading to an enhancement of the appearance of the automobile.

In the bumper reinforcing structure of the automobile consisting of two or more different materials, wherein the bumper reinforcing structure of the automobile has the separate components produced by way of separate processes according to the materials, as the impact beam and the mounting part can be separately produced and connected to each other, these components can be formed ease by press moulding or the injection moulding. Thus, the entire process for manufacturing the reinforcing structure becomes easy and the manufacturing costs thereof can be reduced.

Further, after being manufactured into various shapes and materials, the impact beam and the mounting part can be selectively connected to each other, so that the bumper reinforcing structure of the automobile is compatible with any type of automobile, whereas the conventional bumper reinforcing structure of the automobile must be manufactured as a single article predetermined for the respective kind of automobile.

Moreover, the impact beam and the mounting part of the bumper reinforcing structure of the automobile can be connected or disconnected as an independent component, so that when one of the impact beam or the mounting part is damaged, only the damaged component can be replaced with a new one without replacing the entire bumper reinforcing structure with a new one, leading to reduction of the costs for maintaining the automobile.

Further, with the nut and bolt coupling structure for the connecting portion of the bumper reinforcing structure of the automobile, the impact beam and the mounting part can be easily connected or disconnected, allowing an easy replacement operation.

It should be understood that the embodiments and the accompanying drawings as described above have been described for illustrative purposes and the present invention is limited only by the following claims. Further, those skilled in the art will appreciate that various modifications, additions and substitutions are allowed without departing from the scope of the accompanying claims.

The disclosures in Korean patent application no. 2003-40600, from which this application claims priority, and in the abstract accompanying this application are incorporated herein by reference.

## Claims

1. A bumper reinforcing structure of an automobile, including an impact beam, a mounting part connected to either end of the impact beam, and a connecting portion for connecting the impact beam and the mounting part to each other at either end of the impact beam,
wherein the impact beam and the mounting part are formed from two or more different materials.

2. A structure as in claim 1, wherein the impact beam and the mounting part are formed from a material having a high strength, such as metal, synthetic resin containing glass fibre or the like, the mounting part including a portion formed from a flexible material, such as plastic.

3. A structure as in claim 1 or 2, wherein the impact beam and the mounting part have various lengths and widths, respectively.

4. A structure as in claim 1, wherein the impact beam is formed from a material having a high strength, such as metal, synthetic resin containing glass fibre or the like, and the mounting part is formed from a flexible material, such as plastic.

5. A structure as in any preceding claim, wherein the mounting part is integrally formed with a bumper mounting bracket, or the mounting part is formed with a bumper mounting bracket by insert injection.

6. A structure as in claim 1, wherein the impact beam is formed from metal and comprises a portion formed from a flexible material, such as plastic.

7. A structure as in any one of claims 1 to 6, wherein the impact beam and the mounting part are connected to each other by means of the connecting portion after being separately produced.

8. A structure as in claim 7, wherein the connecting portion is provided with a fastening means including a bolt coupling structure.

9. A structure as in claim 7, wherein the connecting portion is provided with a fastening means comprising a fitting structure.

10. A structure as in claim 7, 8 or 9, wherein the connecting portion is formed by insert injection or by ultrasonic welding.
